# EUROPEAN PATENT APPLICATION

(11) **EP 4 472 019 A1**
(43) Date of publication of application: **04.12.2024**
(21) Application number: 24171890.7
(22) Date of filing: 23.04.2024
(51) Int. Cl.: H02J 7/00

(54) **METHOD FOR CONTROLLING ON-BOARD CHARGER, AND COMPONENTS THEREOF**

(30) Priority: 25.04.2023 CN 202310457917
(71) Applicant: Kostal (Shanghai) Mechatronic Co., Ltd, Shanghai 201814 (CN); Shanghai Kostal-Huayang Automotive Electric Co., Ltd., Shanghai 201814 (CN)
(72) Inventor: Wu, Yi, Jiading District, Shanghai 201814 (CN); Huang, Yu, Jiading District, Shanghai 201814 (CN); Wu, Jie, Jiading District, Shanghai 201814 (CN)
(74) Representative: Grünecker Patent- und Rechtsanwälte PartG mbB

(57) **Abstract**

A method for controlling an on-board charger, and components thereof are provided, which relate to the field of electric vehicles. A direct-current bus voltage of the on-board charger operating in a mode of V2L is obtained. In order to avoid that the load cannot be started or stopped due to the low direct-current bus voltage of the on-board charger, an alternating-current output voltage of the on-board charger is reduced actively to a first target alternating-current output voltage when the direct-current bus voltage is less than a preset voltage, thereby reducing the power requirements of the load and ensuring the output characteristics of the on-board charger. When the alternating-current output voltage of the on-board charger is reduced for a preset derating time period, the direct-current bus voltage of the on-board charger is gradually boosted. Then, the alternating-current output voltage of the on-board charger is increased to the second target alternating-current output voltage to ensure the normal power requirements of the load.

## Description

### FIELD

The present disclosure relates to the field of electric vehicles, and in particular to a method for controlling an on-board charger, and components thereof.

### BACKGROUND

An on-board charger of a vehicle, when operates in a mode of Vehicle-to-Load (V2L), obtains direct-current power from a vehicle battery, performs inversion on the direct-current power, performs alternating-current filtering, and then supplies alternating-current power to an external load. The external load includes conventional household appliances such as a notebook computer, a television, a refrigerator, or the like. Those high-power loads or those loads that require a power higher than a load capacity of the on-board charger, when being connected to the on-board charger, may interfere with the output characteristics of the on-board charger. For example, voltage sag may occur at a direct-current bus of the on-board charger. Thus, the on-board charger cannot normally start or stop such load.

### SUMMARY

A method for controlling an on-board charger, and components thereof are provided according to the present disclosure to actively reduce an alternating-current output voltage of the on-board charger operating in a mode of V2L, thereby ensuring a normal operation of a load having a high power.

In order to solve the above technical problems, a method for controlling an on-board charger is provided according to the present disclosure. The method includes: obtaining a direct-current bus voltage of the on-board charger operating in a mode of V2L; reducing an alternating-current output voltage of the on-board charger to a first target alternating-current output voltage when the direct-current bus voltage is less than a preset voltage; and increasing the alternating-current output voltage of the on-board charger to a second target alternating-current output voltage when the alternating-current output voltage of the on-board charger is reduced for a preset derating time period, to cause a load to operate at an effective value of the second target alternating-current output voltage.

In another aspect, after obtaining the direct-current bus voltage of the on-board charger, the method further includes: obtaining the alternating-current output voltage outputted by the on-board charger to the load, and determining a peak value of the alternating-current output voltage based on the alternating-current output voltage. The reducing of an alternating-current output voltage of the on-board charger to a first target alternating-current output voltage when the direct-current bus voltage is less than a preset voltage includes: reducing the alternating-current output voltage of the on-board charger to the first target alternating-current output voltage when the peak value of the alternating-current output voltage is greater than a product of a first preset proportional coefficient and the direct-current bus voltage, where the first preset proportional coefficient is less than 1.

In another aspect, the increasing of the alternating-current output voltage of the on-board charger to a second target alternating-current output voltage includes: increasing the alternating-current output voltage of the on-board charger by a preset iterative voltage boost value; determining whether the alternating-current output voltage increased by the preset iterative voltage boost value reaches the second target alternating-current output voltage; and determining the alternating-current output voltage increased by the preset iterative voltage boost value as an updated alternating-current output voltage of the on-board charger in a case that the alternating-current output voltage increased by the preset iterative voltage boost value does not reach the second target alternating-current output voltage, and increasing the updated alternating-current output voltage of the on-board charger by the preset iterative voltage boost value.

In another aspect, after obtaining the direct-current bus voltage of the on-board charger, the method further includes: increasing the alternating-current output voltage of the on-board charger by the preset iterative voltage boost value when the direct-current bus voltage is not less than the preset voltage.

In another aspect, the reducing of an alternating-current output voltage of the on-board charger to a first target alternating-current output voltage includes: controlling an operation state of a power factor correction module in the on-board charger to reduce the alternating-current output voltage to the first target alternating-current output voltage.

In another aspect, after obtaining the direct-current bus voltage of the on-board charger operating in the mode of V2L, the method further includes: obtaining an alternating-current output current of the on-board charger and determining an effective value of the alternating-current output current; and reducing the alternating-current output voltage of the on-board charger to the first target alternating-current output voltage when the effective value of the alternating-current output current is greater than a preset overcurrent protection value.

In order to solve the above technical problems, a system for controlling an on-board charger is further provided according to the present disclosure. The system includes a parameter acquisition unit, an alternating-current output voltage derating unit, and an alternating-current output voltage boosting unit. The parameter acquisition unit is configured to obtain a direct-current bus voltage of the on-board charger operating in a mode of V2L. The alternating-current output voltage derating unit is configured to reduce an alternating-current output voltage of the on-board charger to a first target alternating-current output voltage when the direct-current bus voltage is less than a preset voltage. The alternating-current output voltage boosting unit is configured to increase the alternating-current output voltage of the on-board charger to a second target alternating-current output voltage when the alternating-current output voltage of the on-board charger is reduced for a preset derating time period, to cause a load to operate at an effective value of the second target alternating-current output voltage.

In order to solve the above technical problems, a device for controlling an on-board charger is further provided according to the present disclosure. The device includes a memory and a processor. The memory stores a computer program. The processor is configured to, when executing the computer program, perform the method for controlling an on-board charger described above.

In order to solve the above technical problems, a vehicle is further provided according to the present disclosure. The vehicle includes the device for controlling an on-board charger described above.

In order to solve the above technical problems, a computer-readable storage medium is further provided according to the present disclosure. The computer-readable storage medium stores a computer program. The computer program, when executed by a processor, causes the processor to perform the method for controlling an on-board charger described above.

In summary, a method for controlling an on-board charger, and components thereof are provided according to the present disclosure. A direct-current bus voltage of the on-board charger operating in a mode of V2L is obtained. In order to avoid that the load cannot be started or stopped due to the low direct-current bus voltage of the on-board charger, an alternating-current output voltage of the on-board charger is reduced actively to a first target alternating-current output voltage when the direct-current bus voltage is less than a preset voltage, thereby reducing the power requirements of the load and ensuring the output characteristics of the on-board charger. When the alternating-current output voltage of the on-board charger is reduced for a preset derating time period, the direct-current bus voltage of the on-board charger is gradually boosted. Then, the alternating-current output voltage of the on-board charger is increased to a second target alternating-current output voltage to ensure the normal power requirements of the load.

### BRIEF DESCRIPTION OF THE DRAWINGS

In order to more clearly describe the technical solutions in the embodiments of the present disclosure, drawings to be used in the description of the conventional technology and the embodiments are briefly described hereinafter. It is apparent that the drawings described below are merely used for describing some embodiments of the present disclosure, and those skilled in the art can obtain other drawings according to the provided drawings without any creative effort.
Figure 1 is a first flowchart of a method for controlling an on-board charger according to an embodiment of the present disclosure;
Figure 2 is a second flowchart of a method for controlling an on-board charger according to an embodiment of the present disclosure;
Figure 3 is a schematic structural diagram of an on-board charger according to the present disclosure;
Figure 4 is a schematic structural diagram of a system for controlling an on-board charger according to the present disclosure; and
Figure 5 is a schematic structural diagram of a device for controlling an on-board charger according to the present disclosure.

### DETAILED DESCRIPTION OF EMBODIMENTS

A method for controlling an on-board charger, and components thereof are provided according to the present disclosure to actively reduce an alternating-current output voltage of the on-board charger operating in a mode of V2L, thereby ensuring a normal operation of a load having a high power.

In order to make the objective, the technical solutions and advantages of the embodiments of the present disclosure more clear, the technical solutions in the embodiments of the present disclosure are described below in conjunction with the drawings in the embodiments of the present disclosure. Apparently, the embodiments described below are only some embodiments of the present disclosure, rather than all the embodiments. Any other embodiments obtained by those skilled in the art based on the embodiments in the present disclosure without any creative effort fall within the protection scope of the present disclosure.

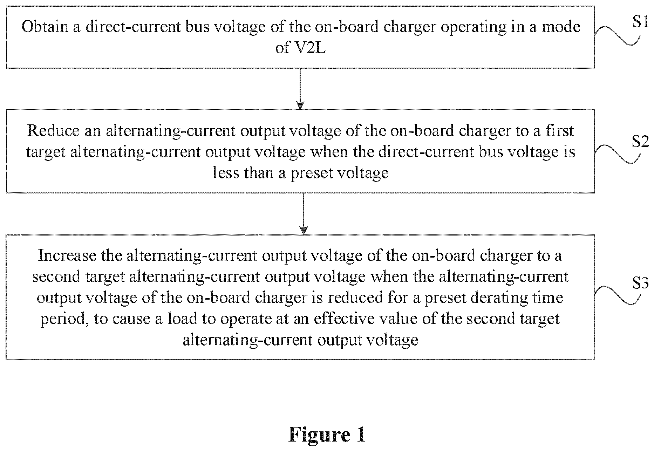

Referring to Figure 1, Figure 1 is a first flowchart of a method for controlling an on-board charger according to an embodiment of the present disclosure. The method for controlling an on-board charger includes the following steps.

At step S 1, obtain a direct-current bus voltage of the on-board charger operating in a mode of V2L.

At step S2, reduce an alternating-current output voltage of the on-board charger to a first target alternating-current output voltage when the direct-current bus voltage is less than a preset voltage.

At step S3, increase the alternating-current output voltage of the on-board charger to a second target alternating-current output voltage when the alternating-current output voltage of the on-board charger is reduced for a preset derating time period, to cause a load to operate at an effective value of the second target alternating-current output voltage.

In the mode of V2L, the on-board charger obtains direct-current power from a vehicle battery and then supplies alternating-current power to an external load such as a conventional household appliance or the like. For a load with a low rated power within the load capacity of the on-board charger, the on-board charger can start the load normally and drive the load to operate stably. For a load with a rated power exceeding the load capacity of the on-board charger, the load, when being connected to the on-board charger, greatly interferes with the output characteristics of the on-board charger, resulting in a sharp drop of the direct-current bus voltage of the on-board charger. Thus, the load may be started and stopped frequently. In view of this situation, in the present disclosure, the alternating-current output voltage of the on-board charger is reduced in advance before it is determined that the abnormal output characteristics of the on-board charger occurs, thereby reducing the actual power requirements of the load. After the direct-current bus voltage of the on-board charger is gradually boosted, the alternating-current output voltage of the on-board charger is increased to meet the normal power requirements of the load, so that the output characteristics of the on-board charger is not interfered with. Therefore, with the method for controlling an on-board charger according to the present disclosure, the load with either a high power or a low power can be started normally and operates stably.

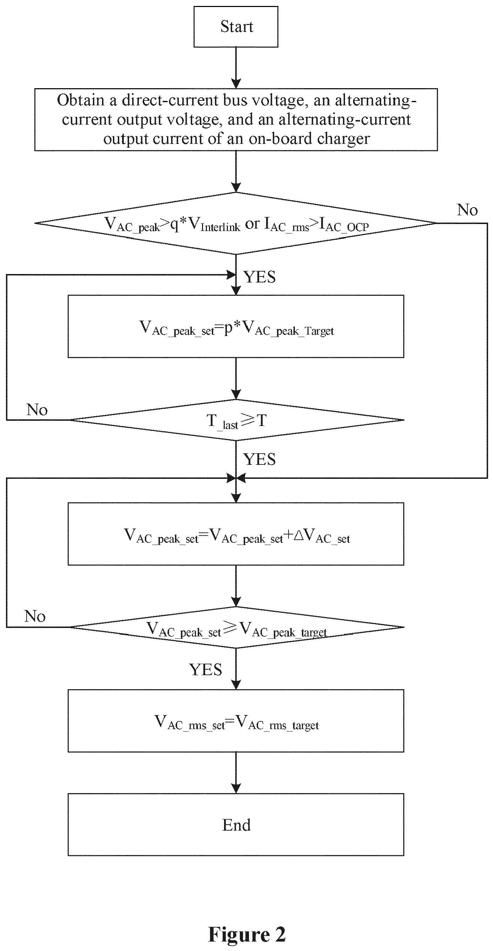

Referring to Figure 2, Figure 2 is a second flowchart of a method for controlling an on-board charger according to an embodiment of the present disclosure. In Figure 2, *V_{AC-peak}* represents a peak value of the alternating-current output voltage, q represents a first preset proportional coefficient, *Vᵢₙₜₑᵣₗᵢₙₖ* represents the direct-current bus voltage, *V_{AC-peak -set}* represents the first target alternating-current output voltage, *V_{AC-peak} -target* represents the second target alternating-current output voltage, p represents a preset derating coefficient, *T₋ₗₐₛₜ* represents an actual time period from a timing at which the alternating-current output voltage of the on-board charger starts to being reduced to the current timing, *T* represents the preset derating time period, Δ*V_{AC-set}* represents a preset iterative voltage boost value, *I_{AC-rms}* represents an effective value of the alternating-current output current, *I_{AC-OCP}* represents a preset overcurrent protection value, *V_{AC-rms -set}* represents an effective value of the first target alternating-current output voltage, and *V_{AC-rms} -target* represents an effective value of the second target alternating-current output voltage.

Specifically, the direct-current bus voltage of the on-board charger operating in the mode of V2L is obtained. For example, a voltage at an input terminal of a power factor correction module in the on-board charger is acquired in real time or at a certain frequency by a voltage sensor, and the acquired voltage is determined as the direct-current bus voltage. After obtaining the direct-current bus voltage, it is determined whether the direct-current bus voltage is less than the preset voltage (where the preset voltage is predetermined according to actual situations and indicates whether the output characteristics of the on-board charger is interfered with, and it does not need to reset the preset voltage each time unless necessary). When the direct-current bus voltage is less than the preset voltage, it indicates that the output characteristics of the on-board charger is to be interfered with. That is, a load with a high power may be connected to the on-board charger. In view of this situation, in the present disclosure, the alternating-current output voltage of the on-board charger is reduced to the first target alternating-current output voltage. Since the alternating-current voltage outputted by the on-board charger is reduced, the actual power requirement of the load is reduced, thereby avoiding an influence of the load on the output characteristics of the on-board charger. When the alternating-current output voltage of the on-board charger is reduced for a preset derating time period, the direct-current bus voltage of the on-board charger is gradually boosted, and the output characteristics of the on-board charger is gradually unaffected by the load and tends to be stable. Therefore, according to the present disclosure, the alternating-current output voltage of the on-board charger is increased to the second target alternating-current output voltage, and thus the effective value of the alternating-current output voltage of the on-board charger is equal to the effective value of the second target alternating-current output voltage, thereby meeting the normal power requirement of the load and ensuring the stable operation of the load.

It should further be noted that the first target alternating-current output voltage and the second target alternating-current output voltage are not limited in the present disclosure. For example, the first target alternating-current output voltage may be equal to a product of the second target alternating-current output voltage and a preset derating coefficient, where the preset derating coefficient is determined according to actual performance of the on-board charger. In the present disclosure, considering the different voltage amplitudes of power grids in different countries, the preset derating coefficient is set to a small value for safety. For example, the preset derating coefficient may be set to a value ranging from 0.2 to 0.6.

It should further be noted that the preset derating time period may be predetermined based on experiments. A time period required for the direct-current bus voltage of the on-board charger to be increased from a value after the sharp drop to a value at which the on-board charger operates normally is determined based on experiments, and this time period is determined as the preset derating time period.

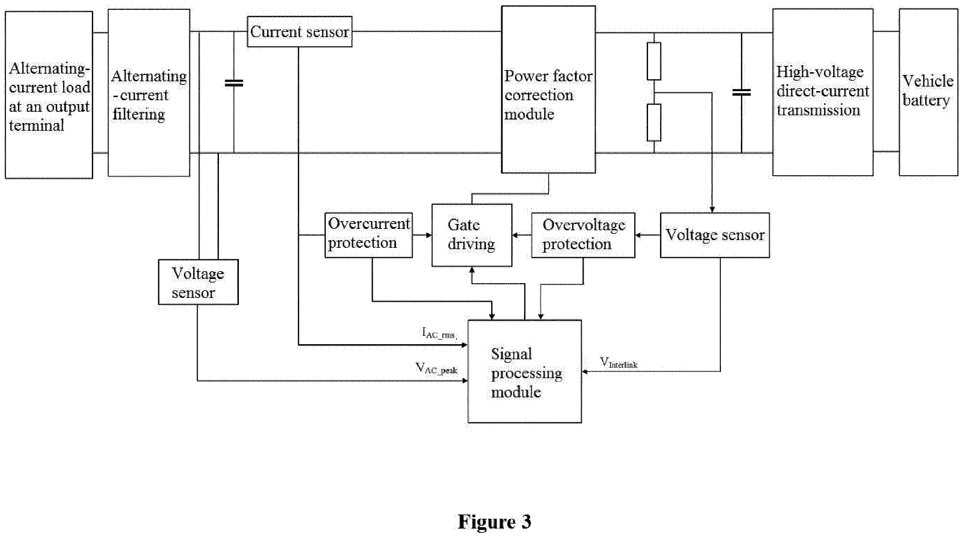

In addition, the execution body of the method for controlling an on-board charger according to the present disclosure may be a processor. For example, the execution body is a signal processing module shown in Figure 3. Figure 3 is a schematic structural diagram of an on-board charger according to the present disclosure. In Figure 3, the signal processing module obtains a direct-current bus voltage from a voltage sensor arranged at an input terminal of a power factor correction module and obtains an alternating-current output voltage from a voltage sensor arranged at an output terminal of the power factor correction module, and then performs the method for controlling an on-board charger. In addition, the alternating-current output voltage of the on-board charger may be adjusted (including reducing the alternating-current output voltage to the first target alternating-current output voltage and increasing the alternating-current output voltage to the second target alternating-current output voltage) by changing an operation state of the power factor correction module.

In summary, a method for controlling an on-board charger is provided according to the present disclosure. The direct-current bus voltage of the on-board charger operating in the mode of V2L is obtained. In order to avoid that the load cannot be started or stopped due to the low direct-current bus voltage of the on-board charger, the alternating-current output voltage of the on-board charger is reduced to the first target alternating-current output voltage when the direct-current bus voltage is less than the preset voltage, thereby reducing the power requirements of the load and ensuring the output characteristics of the on-board charger. When the alternating-current output voltage of the on-board charger is reduced for a preset derating time period, the direct-current bus voltage of the on-board charger is gradually boosted. Then, the alternating-current output voltage of the on-board charger is increased to the second target alternating-current output voltage to ensure the normal power requirements of the load.

On the basis of the above embodiments, in some embodiments, after the direct-current bus voltage of the on-board charger is obtained, the method further includes: obtaining the alternating-current output voltage outputted by the on-board charger to the load, and determining a peak value of the alternating-current output voltage based on the alternating-current output voltage. The reducing of an alternating-current output voltage of the on-board charger to a first target alternating-current output voltage when the direct-current bus voltage is less than a preset voltage includes: reducing the alternating-current output voltage of the on-board charger to the first target alternating-current output voltage when the peak value of the alternating-current output voltage is greater than a product of a first preset proportional coefficient and the direct-current bus voltage, where the first preset proportional coefficient is less than 1.

In practice, when a load with a rated power exceeding the load capacity of the on-board charger is connected to the on-board charger, the direct-current bus voltage of the on-board charger drops sharply and is less than a peak value of the alternating-current output voltage of the on-board charger. Therefore, in the present embodiment, the preset voltage is determined based on the peak value of the alternating-current output voltage of the on-board charger. Specifically, both the direct-current bus voltage of the on-board charger and the alternating-current output voltage outputted by the on-board charger to the load are obtained, and then a peak value of the alternating-current output voltage is determined based on the alternating-current output voltage. The manner in which the peak value of the alternating-current output voltage is determined is not limited in the present disclosure. In the present disclosure, it is required to actively reduce the alternating-current output voltage before the output characteristics of the on-board charger is interfered with and the load cannot be started normally. Therefore, in practice, the alternating-current output voltage should be reduced before the direct-current bus voltage drops sharply to the peak value of the alternating-current output voltage. Therefore, in the present embodiment, the alternating-current output voltage of the on-board charger is reduced to the first target alternating-current output voltage when the peak value of the alternating-current output voltage is greater than a product of a first preset proportional coefficient and the direct-current bus voltage. The first preset proportional coefficient should be less than 1. For example, the first preset proportional coefficient is set to be a value ranging from 0.7 to 0.9.

Referring to Figure 2, Figure 2 is a second flowchart of a method for controlling an on-board charger according to an embodiment of the present disclosure. In Figure 2, *V_{AC-peak}* represents a peak value of the alternating-current output voltage, q represents a first preset proportional coefficient, *Vᵢₙₜₑᵣₗᵢₙₖ* represents the direct-current bus voltage, *V_{AC-peak -set}* represents the first target alternating-current output voltage, *V_{AC-peak} -target* represents the second target alternating-current output voltage, p represents a preset derating coefficient, *T₋ₗₐₛₜ* represents an actual time period from a timing at which the alternating-current output voltage of the on-board charger starts to being reduced to the current timing, *T* represents the preset derating time period, Δ*V_{AC-set}* represents a preset iterative voltage boost value, *I_{AC-rms}* represents an effective value of the alternating-current output current, *I_{AC-OCP}* represents a preset overcurrent protection value, *V_{AC-rms -set}* represents an effective value of the first target alternating-current output voltage, and *V_{AC-rms} -target* represents an effective value of the second target alternating-current output voltage.

In summary, when the peak value of the alternating-current output voltage is greater than the product of the first preset proportional coefficient and the direct-current bus voltage, the alternating-current output voltage of the on-board charger is reduced to the first target alternating-current output voltage, so that the actual power requirement of the load is reduced, thereby avoiding that the on-board charger cannot start the load.

In some embodiments, the increasing of alternating-current output voltage of the on-board charger to a second target alternating-current output voltage includes: increasing the alternating-current output voltage of the on-board charger by a preset iterative voltage boost value; determining whether the alternating-current output voltage increased by the preset iterative voltage boost value reaches the second target alternating-current output voltage; and determining the alternating-current output voltage increased by the preset iterative voltage boost value as an updated alternating-current output voltage of the on-board charger in a case that the alternating-current output voltage increased by the preset iterative voltage boost value does not reach the second target alternating-current output voltage, and increasing the updated alternating-current output voltage of the on-board charger by the preset iterative voltage boost value.

In the present embodiment, when the alternating-current output voltage of the on-board charger is reduced for the preset derating time period, that is, when the direct-current bus voltage of the on-board charger is increased to a voltage at which the output characteristics of the on-board charger will not be affected by the load, the alternating-current output voltage of the on-board charger is increased. The alternating-current output voltage of the on-board charger is increased to the second target alternating-current output voltage, so as to ensure the normal operation of the load. Moreover, in the present embodiment, the alternating-current output voltage of the on-board charger is increased step by step in a soft start manner, thereby ensuring the stable operation of the load. That is, the alternating-current output voltage of the on-board charger is increased by a preset iterative voltage boost value each time until the alternating-current output voltage reaches the second target alternating-current output voltage. In practice, the preset iterative voltage boost value may be set to 1 or 2. Referring to Figure 2, Figure 2 is a second flowchart of a method for controlling an on-board charger according to an embodiment of the present disclosure. In Figure 2, *V_{AC-peak}* represents a peak value of the alternating-current output voltage, q represents a first preset proportional coefficient, *Vᵢₙₜₑᵣₗᵢₙₖ* represents the direct-current bus voltage, *V_{AC-peak -set}* represents the first target alternating-current output voltage, *V_{AC-peak} -target* represents the second target alternating-current output voltage, p represents a preset derating coefficient, *T₋ₗₐₛₜ* represents an actual time period from a timing at which the alternating-current output voltage of the on-board charger starts to being reduced to the current timing, *T* represents the preset derating time period, Δ*V_{AC-set}* represents a preset iterative voltage boost value, *I_{AC-rms}* represents an effective value of the alternating-current output current, *I_{AC-OCP}* represents a preset overcurrent protection value, *V_{AC-rms -set}* represents an effective value of the first target alternating-current output voltage, and *V_{AC-rms} -target* represents an effective value of the second target alternating-current output voltage.

In addition, in a case that the direct-current bus voltage is not less than the preset voltage, the alternating-current output voltage of the on-board charger may still be increased to the second target alternating-current output voltage step by step in the soft start manner by taking the preset iterative voltage boost value as an iteration step size, so as to ensure the stable operation of the load.

In summary, the alternating-current output voltage of the on-board charger is controlled in the soft start manner in the present embodiment, further ensuring the stable operation of the load.

In some embodiments, after the direct-current bus voltage of the on-board charger operating in the mode of V2L is obtained, the method further includes: obtaining an alternating-current output current of the on-board charger and determining an effective value of the alternating-current output current; and reducing the alternating-current output voltage of the on-board charger to the first target alternating-current output voltage when the effective value of the alternating-current output current is greater than a preset overcurrent protection value.

Referring to Figure 2, Figure 2 is a second flowchart of a method for controlling an on-board charger according to an embodiment of the present disclosure. In Figure 2, *V_{AC-peak}* represents a peak value of the alternating-current output voltage, q represents a first preset proportional coefficient, *Vᵢₙₜₑᵣₗᵢₙₖ* represents the direct-current bus voltage, *V_{AC-peak -set}* represents the first target alternating-current output voltage, *V_{AC-peak} -target* represents the second target alternating-current output voltage, p represents a preset derating coefficient, *T₋ₗₐₛₜ* represents an actual time period from a timing at which the alternating-current output voltage of the on-board charger starts to being reduced to the current timing, *T* represents the preset derating time period, Δ*V_{AC-set}* represents a preset iterative voltage boost value, *I_{AC-rms}* represents an effective value of the alternating-current output current, *I_{AC-OCP}* represents a preset overcurrent protection value, *V_{AC-rms -set}* represents an effective value of the first target alternating-current output voltage, and *V_{AC-rms} -target* represents an effective value of the second target alternating-current output voltage.

An input current of a load in a high-amplitude power network is different from an input current of the load in a low-amplitude power network. For the load in the low-amplitude power network (for example, due to different power grid standards in different countries or regions, the power network adopted by some countries in which a voltage ranging from 110V to 120V is used as a power supply voltage for household appliances as specified in the European standard belongs to the low-amplitude power network), the alternating-current current of the load is high at the moment when the load is connected to the on-board charger. Thus, it is possible to trigger overcurrent protection of the on-board charger, resulting in that the on-board charger cannot operate normally and thus cannot successfully start and drive the load, or even damaging the on-board charger. Moreover, no matter whether the power requirement of the load exceeds the load capacity of the on-board charger or not, the above problem exists at the moment when the load is connected to the on-board charger. Therefore, in the present embodiment, in order to ensure that the on-board charger can normally drive the load to operate, it is determined whether the on-board charger can normally provide alternating-current power for the load based on the effective value of the alternating-current output current of the on-board charger after the load is connected to the on-board charger.

Specifically, the alternating-current output current of the on-board charger operating in the mode of V2L is obtained, and an effective value of the alternating-current output current is determined. Then, it is determined whether the effective value of the alternating-current output current is too large, that is, it is determined whether the on-board charger may be affected by an inrush current at the moment when the load is connected to the on-board charger. In a case that the effective value of the alternating-current output current is too large, the alternating-current output voltage of the on-board charger is actively reduced to reduce the actual power requirement of the load, thereby indirectly reducing the alternating-current output current of the on-board charger and ensuring that the on-board charger can start the load normally. Then, the alternating-current output voltage of the on-board charger is increased to the second target alternating-current output voltage, so that the load may operate stably. Therefore, regardless of whether the load has a high-amplitude requirement or a low-amplitude requirement for the power grid, with the method for controlling an on-board charger according to the present embodiment, the on-board charger can operate normally, thereby ensuring the normal starting and operation of the load.

In addition, in the present embodiment, it is determined whether the on-board charger is to be affected by the inrush current by determining whether the effective value of the alternating-current output current is greater than a preset overcurrent protection value. The preset overcurrent protection value should be less than the corresponding current when the on-board charger triggers overcurrent protection. The preset overcurrent protection value may be adjusted based on the characteristics of the on-board charger. It should further be noted that in the present embodiment, the alternating-current output voltage of the on-board charger may be increased to the second target alternating-current output voltage in the soft start manner.

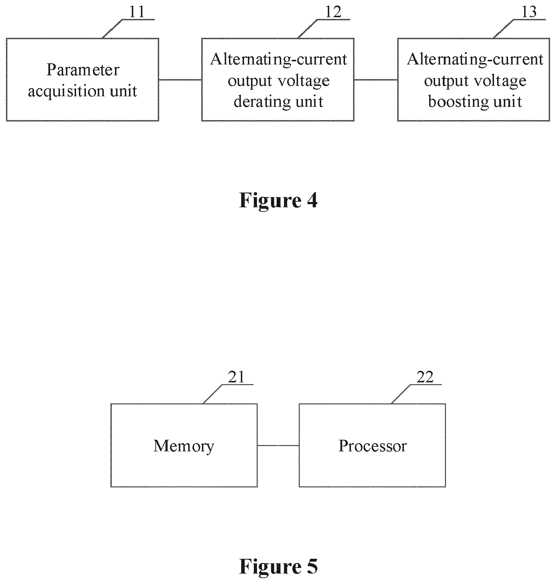

Referring to Figure 4, Figure 4 is a schematic structural diagram of a system for controlling an on-board charger according to the present disclosure. The system for controlling an on-board charger includes a parameter acquisition unit 11, an alternating-current output voltage derating unit 12, and an alternating-current output voltage boosting unit 13.

The parameter acquisition unit 11 is configured to obtain a direct-current bus voltage of the on-board charger operating in a mode of V2L.

The alternating-current output voltage derating unit 12 is configured to reduce an alternating-current output voltage of the on-board charger to a first target alternating-current output voltage when the direct-current bus voltage is less than a preset voltage.

The alternating-current output voltage boosting unit 13 is configured to increase the alternating-current output voltage of the on-board charger to a second target alternating-current output voltage when the alternating-current output voltage of the on-board charger is reduced for a preset derating time period, to cause a load to operate at an effective value of the second target alternating-current output voltage.

A system for controlling an on-board charger is provided according to the present disclosure. A direct-current bus voltage of the on-board charger operating in the mode of V2L is obtained. In order to avoid that the load cannot be started or stopped due to the low direct-current bus voltage of the on-board charger, the alternating-current output voltage of the on-board charger is reduced actively to the first target alternating-current output voltage when the direct-current bus voltage is less than the preset voltage, thereby reducing the power requirements of the load and ensuring the output characteristics of the on-board charger. When the alternating-current output voltage of the on-board charger is reduced for a preset derating time period, the direct-current bus voltage of the on-board charger is gradually boosted. Then, the alternating-current output voltage of the on-board charger is increased to the second target alternating-current output voltage to ensure the normal power requirements of the load.

For details of the system for controlling an on-board charger according to the present disclosure, reference may be made to the above embodiments of the method for controlling an on-board charger, which will not be repeated herein.

On the basis of the above embodiments, in a preferred embodiment, the system for controlling an on-board charger further includes an alternating-current output voltage obtaining unit.

The alternating-current output voltage obtaining unit is configured to obtain the alternating-current output voltage outputted by the on-board charger to the load, and determine a peak value of the alternating-current output voltage based on the alternating-current output voltage.

The alternating-current output voltage derating unit 12 is further configured to reduce the alternating-current output voltage of the on-board charger to the first target alternating-current output voltage when the peak value of the alternating-current output voltage is greater than a product of a first preset proportional coefficient and the direct-current bus voltage. The first preset proportional coefficient is less than 1.

In a preferred embodiment, the alternating-current output voltage boosting unit 13 includes a soft start unit and a determination unit.

The soft start unit is configured to increase the alternating-current output voltage of the on-board charger by a preset iterative voltage boost value when the alternating-current output voltage of the on-board charger is reduced for the preset derating time period.

The determination unit is configured to: determine whether the alternating-current output voltage increased by the preset iterative voltage boost value reaches the second target alternating-current output voltage; and determine the alternating-current output voltage increased by the preset iterative voltage boost value as an updated alternating-current output voltage of the on-board charger in a case that the alternating-current output voltage increased by the preset iterative voltage boost value does not reach the second target alternating-current output voltage, and trigger the soft start unit.

In a preferred embodiment, the system for controlling an on-board charger further includes a normal operation control unit. The normal operation control unit is configured to, after obtaining the direct-current bus voltage of the on-board charger, increase the alternating-current output voltage of the on-board charger by the preset iterative voltage boost value when the direct-current bus voltage is not less than the preset voltage.

In a preferred embodiment, the alternating-current output voltage derating unit 12 is further configured to control an operation state of a power factor correction module in the on-board charger to reduce the alternating-current output voltage to the first target alternating-current output voltage when the direct-current bus voltage is less than the preset voltage.

In a preferred embodiment, the system for controlling an on-board charger further includes an alternating-current output current obtaining unit and an overcurrent protection unit.

The alternating-current output current obtaining unit is configured to, after obtaining the direct-current bus voltage of the on-board charger operating in the mode of V2L, obtain an alternating-current output current of the on-board charger and determine an effective value of the alternating-current output current.

The overcurrent protection unit is configured to trigger the alternating-current output voltage derating unit 12 when the effective value of the alternating-current output current is greater than a preset overcurrent protection value.

Referring to Figure 5, Figure 5 is a schematic structural diagram of a device for controlling an on-board charger according to the present disclosure. The device for controlling an on-board charger includes a memory 21 and a processor 22.

The memory 21 stores a computer program.

The processor 22 is configured to, when executing the computer program, perform the method for controlling an on-board charger described above.

For details of the device for controlling an on-board charger according to the present disclosure, reference may be made to the above embodiments of the method for controlling an on-board charger, which will not be repeated herein.

In order to solve the above technical problems, a vehicle is further provided according to the present disclosure. The vehicle includes the device for controlling an on-board charger described above.

For details of the vehicle according to the present disclosure, reference may be made to the above embodiments of the method for controlling an on-board charger, which will not be repeated herein.

In order to solve the above technical problems, a computer-readable storage medium is further provided according to the present disclosure. The computer-readable storage medium stores a computer program. The computer program, when executed by a processor, causes the processor to perform the method for controlling an on-board charger described above.

For details of the computer-readable storage medium according to the present disclosure, reference may be made to the above embodiments of the method for controlling an on-board charger, which will not be repeated herein.

The embodiments in the specification are described in a progressive manner. Each of the embodiments is mainly focused on describing its differences from other embodiments, and references may be made among these embodiments with respect to the same or similar parts. Since the device disclosed in the embodiments corresponds to the method disclosed in the embodiments, the description for the device is simple, and reference may be made to the description in the method embodiments for the relevant parts.

It should be further noted that relational terms such as "first" and "second" in the specification are only used herein to distinguish one entity or operation from another entity or operation, rather than to necessitate or imply that an actual relationship or order exists between the entities or operations. Furthermore, terms "include", "comprise" or any other variants thereof are intended to be non-exclusive. Therefore, a process, method, article or device including a series of elements includes not only the elements but also other elements that are not enumerated or other elements inherent to such process, method, article or device. Unless expressively limited, a process, method, article or device limited by "comprising/including a(n) ..." does not exclude existence of another identical element in such process, method, article or device.

Those skilled in the art can implement or use the present disclosure based on the above description of the disclosed embodiments. Various modifications to the embodiments are apparent for those skilled in the art. The general principle defined herein may be implemented in other embodiments without departing from the spirit or scope of the present disclosure. Therefore, the present disclosure is not limited to the embodiments described herein, but should be in accordance with the broadest scope consistent with the principle and novel features disclosed herein.

## Claims

1. A method for controlling an on-board charger, comprising:
obtaining a direct-current bus voltage of the on-board charger operating in a mode of V2L;
reducing an alternating-current output voltage of the on-board charger to a first target alternating-current output voltage when the direct-current bus voltage is less than a preset voltage; and
increasing the alternating-current output voltage of the on-board charger to a second target alternating-current output voltage when the alternating-current output voltage of the on-board charger is reduced for a preset derating time period, to cause a load to operate at an effective value of the second target alternating-current output voltage.

2. The method for controlling an on-board charger according to claim 1, wherein after obtaining the direct-current bus voltage of the on-board charger, the method further comprises:
obtaining the alternating-current output voltage outputted by the on-board charger to the load, and determining a peak value of the alternating-current output voltage based on the alternating-current output voltage; and
the reducing of an alternating-current output voltage of the on-board charger to a first target alternating-current output voltage when the direct-current bus voltage is less than a preset voltage comprises:
reducing the alternating-current output voltage of the on-board charger to the first target alternating-current output voltage when the peak value of the alternating-current output voltage is greater than a product of a first preset proportional coefficient and the direct-current bus voltage, wherein the first preset proportional coefficient is less than 1.

3. The method for controlling an on-board charger according to claim 1, wherein the increasing of the alternating-current output voltage of the on-board charger to a second target alternating-current output voltage comprises:
increasing the alternating-current output voltage of the on-board charger by a preset iterative voltage boost value;
determining whether the alternating-current output voltage increased by the preset iterative voltage boost value reaches the second target alternating-current output voltage; and
determining the alternating-current output voltage increased by the preset iterative voltage boost value as an updated alternating-current output voltage of the on-board charger in a case that the alternating-current output voltage increased by the preset iterative voltage boost value does not reach the second target alternating-current output voltage, and increasing the updated alternating-current output voltage of the on-board charger by the preset iterative voltage boost value.

4. The method for controlling an on-board charger according to claim 3, wherein after obtaining the direct-current bus voltage of the on-board charger, the method further comprises:
increasing the alternating-current output voltage of the on-board charger by the preset iterative voltage boost value when the direct-current bus voltage is not less than the preset voltage.

5. The method for controlling an on-board charger according to claim 1, wherein the reducing of an alternating-current output voltage of the on-board charger to a first target alternating-current output voltage comprises:
controlling an operation state of a power factor correction module in the on-board charger to reduce the alternating-current output voltage to the first target alternating-current output voltage.

6. The method for controlling an on-board charger according to any one of claims 1 to 5, wherein after obtaining the direct-current bus voltage of the on-board charger operating in the mode of V2L, the method further comprises:
obtaining an alternating-current output current of the on-board charger and determining an effective value of the alternating-current output current; and
reducing the alternating-current output voltage of the on-board charger to the first target alternating-current output voltage when the effective value of the alternating-current output current is greater than a preset overcurrent protection value.

7. A system for controlling an on-board charger, comprising:
a parameter acquisition unit configured to obtain a direct-current bus voltage of the on-board charger operating in a mode of V2L;
an alternating-current output voltage derating unit configured to reduce an alternating-current output voltage of the on-board charger to a first target alternating-current output voltage when the direct-current bus voltage is less than a preset voltage; and
an alternating-current output voltage boosting unit configured to increase the alternating-current output voltage of the on-board charger to a second target alternating-current output voltage when the alternating-current output voltage of the on-board charger is reduced for a preset derating time period, to cause a load to operate at an effective value of the second target alternating-current output voltage.

8. A device for controlling an on-board charger, comprising:
a memory storing a computer program; and
a processor; wherein
the processor is configured to, when executing the computer program, perform the method for controlling an on-board charger according to any one of claims 1 to 6.

9. A vehicle, comprising the device for controlling an on-board charger according to claim 8.

10. A computer-readable storage medium storing a computer program thereon, wherein the computer program, when executed by a processor, causes the processor to perform the method for controlling an on-board charger according to any one of claims 1 to 6.
